# EUROPEAN PATENT SPECIFICATION

(11) **EP 4 404 093 B1**
(45) Date of publication and mention of the grant of the patent: **12.08.2026**
(21) Application number: 24150827.4
(22) Date of filing: 09.01.2024
(51) Int. Cl.: G06F 21/57, H04L 9/08, H04L 9/32

(54) **STORAGE SYSTEM INCLUDING STORAGE DEVICE AND HOST PROVISIONING CERTIFICATE INTO THE STORAGE DEVICE, SYSTEM INCLUDING THE STORAGE SYSTEM, AND METHOD OF OPERATING THE SYSTEM**
SPEICHERSYSTEM MIT SPEICHERVORRICHTUNG UND HOST-BEREITSTELLUNGSZERTIFIKAT IN DER SPEICHERVORRICHTUNG, SYSTEM MIT DEM SPEICHERSYSTEM UND VERFAHREN ZUM BETRIEB DES SYSTEMS
SYSTÈME DE STOCKAGE COMPRENANT UN DISPOSITIF DE STOCKAGE ET UN CERTIFICAT DE FOURNITURE D'HÔTE DANS LE DISPOSITIF DE STOCKAGE, SYSTÈME COMPRENANT LE SYSTÈME DE STOCKAGE ET PROCÉDÉ DE FONCTIONNEMENT DU SYSTÈME

(30) Priority: 20.01.2023 KR 20230009027
(43) Date of publication of application: 24.07.2024
(73) Proprietor: Samsung Electronics Co., Ltd., Suwon-si, Gyeonggi-do 16677 (KR)
(72) Inventor: YOON, Sungho, 16677 Suwon-si (KR); CHU, Younsung, 16677 Suwon-si (KR)
(74) Representative: Marks & Clerk LLP

(56) References cited:
- WO-A1-2017/139161
- WO-A1-2018/064392

## Description

### BACKGROUND

The inventive concepts relate to storage systems, and more particularly, to systems for provisioning a certificate into a storage device.

When a storage device boots, a host may authenticate the storage device based on a certificate stored in the storage device. When the authentication is complete, the storage device may execute a bootloader.

A bootloader distributor may update the bootloader stored in the storage device via the host. The certificate stored in the storage device is generated based on the bootloader, and thus, after the bootloader is updated, the storage device may not be authenticated using the prior certificate. In this case, it is needed to provision a new certificate into the storage device.

WO2017/139161A1 describes a computing device for receiving an image signed with a first key. The device signs the image with a second key to generate a dual-signed image.

WO2018/064392A1 describes a programming unit for programming a plurality of trusted devices. A security kernel is installed into these devices and is used to reboot the devices following which a target payload is securely installed into the devices.

### SUMMARY

The inventive concepts provide storage systems configured to provide a common key to a host and a storage device in a bootloader update process, establish a secure session based on a pre-shared key, and provision a certificate into the storage device in the secure session.

According to some aspects of the inventive concepts, there is provided a system including a storage device, a first device, and a second device. The storage device is configured to execute a software image. The first device is configured to store a first secret key and a first public key associated with the first secret key. The second device is configured to store a first key and a second key and is configured to receive the first public key from the first device, generate a first ciphertext for an updated software image, based on the first key, and the second key, generate a second ciphertext for the first ciphertext and the second key, based on the first public key, and provide the second ciphertext to the first device.

The first device is configured to obtain the first ciphertext and the second key by decrypting the second ciphertext based on the first secret key and provide the first ciphertext to the storage device. The storage device is further configured to obtain the updated software image and the second key by decrypting the first ciphertext based on the first key, and establish a secure session between the first device and the storage device based on the second key. The first device is further configured to provision, based on the second key, a certificate for a unique key of the storage device into the storage device.

According to some aspects of the inventive concepts, there is provided a method of operating a system, the system comprising a storage device storing a first key and configured to execute a software image, a first device configured to control the storage device, and a second device configured to generate the software image and storing the first key. The method comprises, at the second device, receiving from the first device a first public key and generating a first ciphertext for an updated software image and a second key, based on the first key, generating a second ciphertext for the first ciphertext and the second key, based on the first public key, and providing the second ciphertext to the first device.

The method further comprises, at the first device, obtaining the first ciphertext and the second key by decrypting the second ciphertext based on a first secret key and providing the first ciphertext and the second key to the storage device, at the storage device, obtaining the updated software image and the second key by decrypting the first ciphertext based on the first key, and establishing a secure session between the first device and the storage device based on the second key, and, at the first device, provisioning via the secure session, based on the second key (KEYB), a certificate for a unique key of the storage device into the storage device.

At least some of the above and other features of the invention are set out in the claims.

### BRIEF DESCRIPTION OF THE DRAWINGS

Example embodiments will be more clearly understood from the following detailed description taken in conjunction with the accompanying drawings in which:
FIG. 1 is a block diagram illustrating a system according to some example embodiments;
FIG. 2 is a block diagram illustrating a signature generation system according to some example embodiments;
FIG. 3 is a diagram illustrating a signature verification system according to some example embodiments;
FIG. 4 is a block diagram illustrating a storage system including a host and a storage device according to some example embodiments;
FIG. 5 is a diagram illustrating a device authentication architecture according to some example embodiments;
FIG. 6 is a diagram illustrating a method of operating a storage system according to some example embodiments;
FIG. 7 is a diagram illustrating secure session establishment operations according to some example embodiments;
FIG. 8 is a diagram illustrating a method of operating a system according to some example embodiments;
FIG. 9 is a diagram illustrating a method of operating a system according to some example embodiments; and
FIG. 10 is a diagram illustrating a method of operating a system according to some example embodiments.

### DETAILED DESCRIPTION OF THE EMBODIMENTS

Hereinafter, various example embodiments will be described with reference to the accompanying drawings.

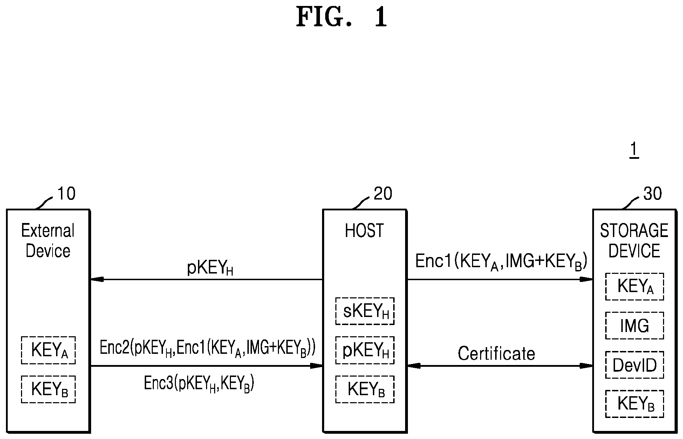

FIG. 1 is a block diagram illustrating a system 1 according to some example embodiments.

Referring to FIG. 1, the system 1 may include an external device 10, a host 20, and a storage device 30.

The external device 10 may correspond to a firmware distributor. The external device 10 may manage a first key KEY_{A} and a second key KEY_{B} such that the first key KEY_{A} and the second key KEY_{B} may not be disclosed to the outside. For example, the external device 10 may manage the first key KEY_{A} and the second key KEY_{B} using a hardware security module (HSM). The first key KEY_{A} may be a key provisioned into the storage device 30 when the storage device 30 is manufactured. The second key KEY_{B} may be a key that is valid while a secure session is maintained between the host 20 and the storage device 30.

The host 20 may be one of stationary computing systems such as a desktop computer, a server, a workstation, or the like, or one of mobile computing systems such as a laptop computer, a tablet computer, a personal digital assistant (PDA), a mobile phone, a smartphone, or the like. The host 20 may include a processor configured to control the storage device 30. For example, the host 20 may include a central processing unit (CPU), an application processor (AP), a graphics processing unit (GPU), a neural processing unit (NPU), an image signal processor (ISP), or the like. The host 20 may store a unique secret key sKEY_{H} and a public key pKEY_{H}.

The storage device 30 may include non-volatile memory or volatile memory. The storage device 30 may perform various operations based on a software image IMG (for example, a bootloader BL and firmware FW). For example, when power is applied to the storage device 30, the bootloader BL and the firmware FW may be sequentially executed. In some example embodiments, the firmware FW may control the storage device 30 such that the storage device 30 may perform an address conversion operation to convert a logical address into a physical address. The storage device 30 may store the first key KEY_{A} provisioned into the storage device 30 when the storage device 30 is manufactured. In some example embodiments, the software image IMG may refer to the bootloader BL or the firmware FW.

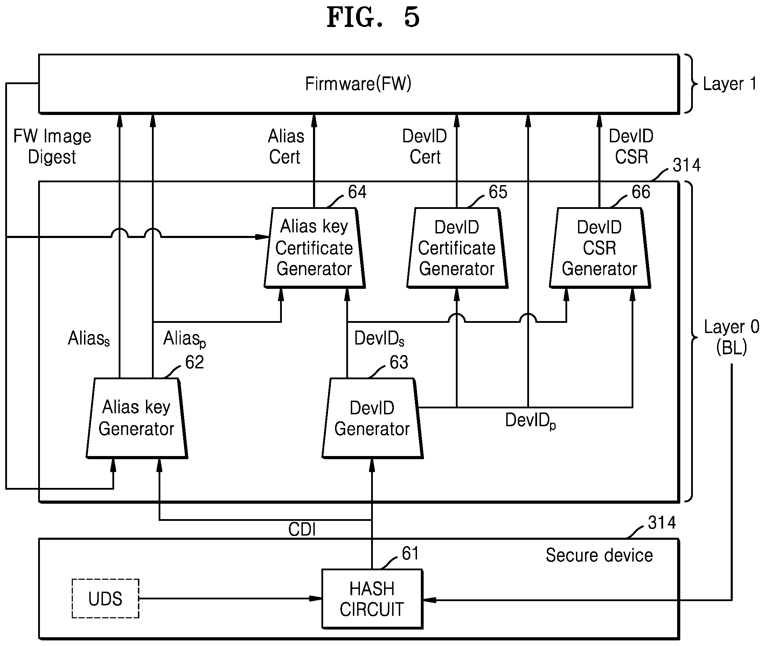

The storage device 30 may generate and store a unique device identifier DevID. The device identifier DevID may be generated based on the software image IMG (for example, the bootloader BL). The device identifier DevID may include a device identifier secret key DevIDₛ (refer to FIG. 5) and a device identifier public key DevIDₚ (refer to FIG. 5).

The storage device 30 may receive a certificate for the device identifier DevID from the host 20 and store the certificate. When the storage device 30 boots, the storage device 30 may provide the stored certificate to the host 20, and the host 20 may identify whether the certificate of the storage device 30 is genuine. When the certificate is genuine, the host 20 may store data in the storage device 30 or read data from the storage device 30.

When an update of the software image IMG is required, the external device 10 may provide a new software image IMG to the storage device 30 directly of via the host 20, and then, the device identifier DevID of the storage device 30 may be changed. When the device identifier DevID of the storage device 30 is changed, the storage device 30 may need to receive a new certificate from the host 20. An operation in which the host 20 provisions a certificate into the storage device 30 may be performed through a secure session to prevent or reduce a security threat. In some example embodiments, the host 20 and the storage device 30 may establish a secure session by performing encryption and decryption based on the second key KEY_{B} that is pre-shared (or, alternatively, shared at a same time as establish a secure session or another time) and provided from the external device 10.

The host 20 and the storage device 30 may safely pre-share the second key KEY_{B} through an update operation on the software image IMG.

For example, referring to FIG. 1, the host 20 may provide the public key pKEY_{H} to the external device 10. The external device 10 may generate a first ciphertext Enc1 by encrypting the new software image IMG and the second key KEY_{B} using the first key KEY_{A}. The first key KEY_{A} may be a symmetric key, and thus, the first ciphertext Enc1 may be decrypted based on the first key KEY_{A}. The external device 10 may generate a second ciphertext Enc2 by encrypting the first ciphertext Enc1 using the public key pKEY_{H}. The external device 10 may generate a third ciphertext Enc3 by encrypting the second key KEY_{B} using the public key pKEY_{H}. The public key pKEY_{H} may be an asymmetric key, and thus, the second ciphertext Enc2 and the third ciphertext Enc3 may be decrypted based on the secret key sKEY_{H}. The external device 10 may provide the second ciphertext Enc2 and the third ciphertext Enc3 to the host 20. Example embodiments are not limited thereto, and the external device 10 may generate one ciphertext for merged data of the first ciphertext Enc1 and the second key KEY_{B} based on the public key pKEY_{H}, and may provide the ciphertext to the host 20.

The host 20 may decrypt the second ciphertext Enc2 and the third ciphertext Enc3 based on the secret key sKEY_{H}. The host 20 may obtain the first ciphertext Enc1 by decrypting the second ciphertext Enc2. The host 20 may obtain the second key KEY_{B} by decrypting the third ciphertext Enc3.

The host 20 may provide the first ciphertext Enc1 to the storage device 30. The storage device 30 may obtain the new software image IMG and the second key KEY_{B} by decrypting the first ciphertext Enc1 based on the first key KEY_{A} that is provisioned into the storage device 30 during the storage device 30 is manufactured.

The host 20 may provision a certificate for a new device identifier DevID to the storage device 30 based on the second key KEY_{B} that is shared therebetween. For example, the host 20 and the storage device 30 may establish a secure session based on the second key KEY_{B} that is shared therebetween, and the host 20 may provision a certificate for new device identifier DevID into the storage device 30 through the secure session. The second key KEY_{B} may be a symmetric key.

According to some example embodiments, because the first key KEY_{A}, provisioned into the storage device 30 during the manufacture of the storage device 30, is not disclosed to the host 20, security of the first key KEY_{A} may be improved.

In addition, before the host 20 provisions the certificate into the storage device 30, the host 20 and the storage device 30 may share the second key KEY_{B} with each other. Because the host 20 and the storage device 30 are capable of establishing a secure session based on the second key KEY_{B} that is pre-shared therebetween, a certificate issued by a verified host, that is, the host 20, may be provisioned into the storage device 30. Therefore, according to some example embodiments, the first key KEY_{A} and the second key KEY_{B} may be used while still reducing the risk of malicious actors accessing data the consumer is accessing and/or using in the storage device 30. Additionally, by using the above example embodiments, the ability of malicious actors to access sensitive data, confidential data, technical data, etc., of the storage devices may be decreased and/or have reduced ability of malicious actors to access sensitive data, confidential data, technical data, etc.

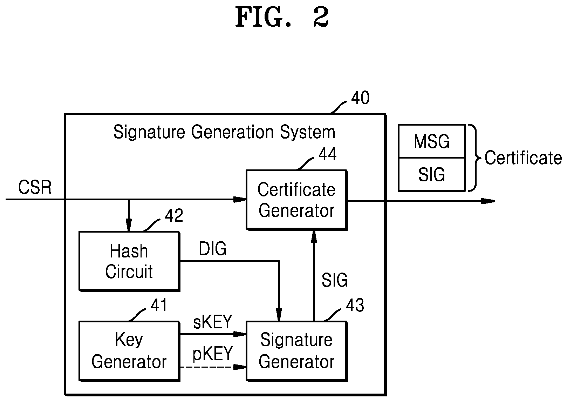

FIG. 2 is a block diagram illustrating a signature generation system 40 according to some example embodiments. FIG. 2 may be described later with reference to FIG. 1. The signature generation system 40 may be implemented with any computing system. For example, each component of the signature generation system 40 may be implemented with a hardware module designed through logic synthesis, a software module executable by at least one core, a processing unit including at least one core and a software module, or a combination thereof.

The signature generating system 40 may be included in the host 20 described above with reference to FIG. 1. Alternatively, the signature generation system 40 may be located remote from the host 20 and may be included in a certificate authority (CA) server that generates certificates. The CA server may generate a certificate and provide the certificate to the host 20.

The signature generating system 40 may receive a certificate signing request (CSR) and may provide a certificate. The CSR may include a public key (for example, a device identifier public key DevIDₚ shown in FIG. 5) of the storage device 30 and various pieces of information for identifying the storage device 30. The certificate may be stored in the storage device 30.

The signature generation system 40 may include a key generator 41, a hash circuit 42, a signature generator 43, and a certificate generator 44.

The key generator 41 may generate a key pair including a secret key sKEY and a public key pKEY. For example, the key generator 41 may include a random number generator and may generate a key pair based on a random number. In some example embodiments, the key generator 41 may be omitted, and the signature generation system 40 may receive at least one of the key pairs from the outside.

The hash circuit 42 may receive the CSR and may generate a digest DIG for the CSR. The digest DIG may refer to a hash value generated based on a hash algorithm such as Secure Hash Algorithm (SHA).

The signature generator 43 may receive the secret key sKEY from the key generator 41 and may generate a digital signature SIG for the digest DIG based on the secret key sKEY. The digital signature SIG may be generated based on any signature algorithm such as Elliptic Curve Digital Signature Algorithm (ECDSA). In some example embodiments, as shown in FIG. 2, the signature generator 43 may receive the public key pKEY and may generate the digital signature SIG based on the secret key sKEY and the public key pKEY.

The certificate generator 44 may receive the CSR and the digital signature SIG and may generate a certificate. That is, the certificate may include the CSR and the digital signature SIG. In some example embodiments, the certificate generator 44 may generate the certificate in the form of a digital envelope and may provide the digital envelope.

Although the process in which the signature generation system 40 generates a certificate for a CSR is described above, the signature generation system 40 may also (for example, alternatively, or in addition to) generate a certificate for any firmware, program, software, or data. In some example embodiments, the signature generation system 40 may provide a certificate chain for a CSR by receiving an additional certificate from the CA server. The certificate chain may be stored in the storage device 30. In some example embodiments, data that is subject to a certificate may be referred to as a message MSG.

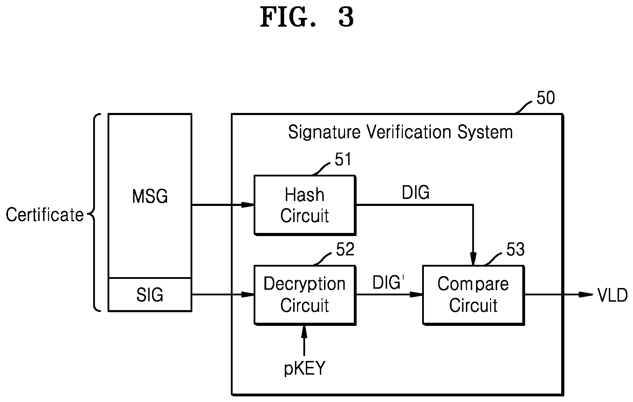

FIG. 3 is a diagram illustrating a signature verification system 50 according to some example embodiments. The signature verification system 50 shown in FIG. 3 may be included in the host 20 or the CA server. The signature verification system 50 may receive a certificate from the storage device 30 when booting the storage device 30 and may verify the received certificate.

Referring to FIG. 3, the signature verification system 50 may receive a certificate including a message MSG and a signature SIG for the message MSG, and may verify the signature SIG based on a public key pKEY to determine whether the message MSG has been generated by a genuine entity (for example, the signature generation system 40 of FIG. 2).

The signature verification system 50 may include a hash circuit 51, a decryption circuit 52, and a comparison circuit 53. The hash circuit 51 may generate a digest DIG of the message MSG based on a hash algorithm. The decryption circuit 52 may generate a comparison digest DIG' by decrypting the signature SIG based on the public key pKEY. The comparison circuit 53 may generate validity information VLD by comparing the digest DIG with the comparison digest DIG'. The validity information VLD may be information indicating that the message MSG is generated by a genuine entity (for example, the signature generation system 40 of FIG. 2). For example, when the validity information VLD indicates that the certificate received from the storage device 30 is valid, the host 20 may determine the storage device 30 as a reliable device and may store data in the storage device 30 or read data from the storage device 30. When the validity information VLD indicates that the certificate received from the storage device 30 is invalid, the storage device 30 may receive a new software image from the host 20 without executing a software image.

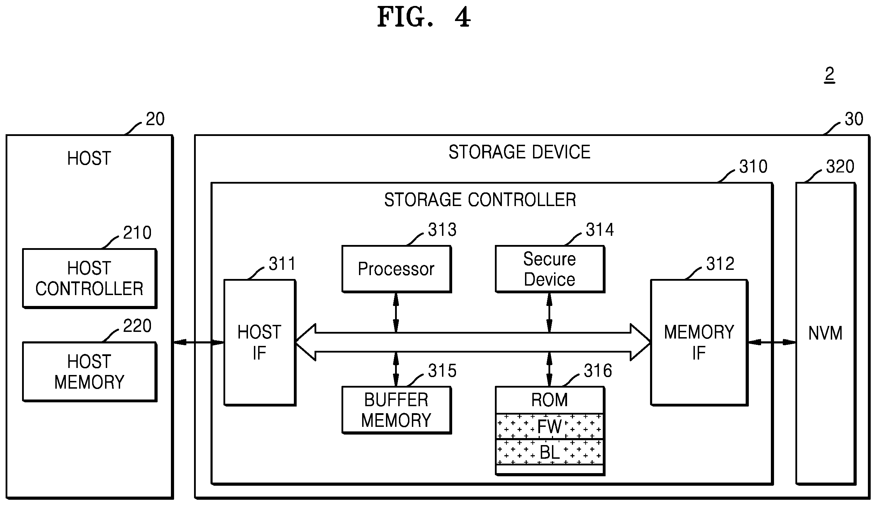

FIG. 4 is a block diagram illustrating a storage system 2 including a host 20 and a storage device 30 according to some example embodiments.

Referring to FIG. 4, the storage system 2 may include the host 20 and the storage device 30. The host 20 may include a host controller 210 and a host memory 220. The storage device 30 may include a storage controller 310 and a non-volatile memory 320.

The host memory 220 may function as a buffer memory for temporarily storing data to be transmitted to the storage device 30 or data transmitted from the storage device 30. The host memory 220 may include a secure memory, and the secure memory may store a secret key sKEY_{H}, a public key pKEY_{H}, and a second key KEY_{B} described above with reference to FIG. 1.

The storage device 30 may include storage media for storing data according to requests from the host 20. For example, the storage device 30 may include at least one selected from the group consisting of a solid state drive (SSD), an embedded memory, and a removable external memory. When the storage device 30 is an SSD, the storage device 30 may conform to the non-volatile memory express (NVMe) standard. When the storage device 30 is an embedded memory or an external memory, the storage device 30 may conform to the universal flash storage (UFS) or embedded multi-media card (eMMC) standard. The host 20 and the storage device 30 may each generate and transmit packets according to an adopted standard protocol. For example, the host 20 and the storage device 30 may transmit/receive encrypted data according to the security protocol and data model (SPDM) protocol.

When the non-volatile memory 320 of the storage device 30 includes a flash memory, the flash memory may include a 2D NAND memory array or a 3D (or vertical) NAND (VNAND) memory array. In another example, the storage device 30 may include various other types of non-volatile memories. For example, the storage device 30 may include magnetic random access memory (MRAM), spin-transfer torque MRAM, conductive bridging RAM (CBRAM), ferroelectric RAM (FeRAM), phase RAM (PRAM), resistive memory (Resistive RAM), or various other types of memory.

In some example embodiments, the host controller 210 and the host memory 220 may be implemented as separate semiconductor chips. Alternatively, in some example embodiments, the host controller 210 and the host memory 220 may be integrated on the same semiconductor chip. For example, the host controller 210 may be any one of a plurality of modules included in an application processor. The application processor may be implemented as a system-on-chip (SoC). In addition, the host memory 220 may be an embedded memory included in the application processor, or may be a non-volatile memory or a memory module disposed outside the application processor.

The host controller 210 may manage an operation in which data stored in the host memory 220 is stored in the storage device 30 or an operation in which data stored in the storage device 30 is stored in the host memory 220. The host controller 210 may perform encryption and decryption operations. As described above with reference to FIG. 1, the host controller 210 may obtain a first ciphertext Enc1 by decrypting a second ciphertext Enc2 using the public key pKEY_{H}. The host controller 210 may obtain the second key KEY_{B} by decrypting a third ciphertext Enc3 using the public key pKEY_{H}.

The storage controller 310 may include a host interface 311, a memory interface 312, a processor 313, a secure device 314, a buffer memory 315, and a read only memory (ROM) 316. In some example embodiments, the buffer memory 315 may also be referred to as a system memory. In some example embodiments, the ROM 316 may be programmable read only memory (PROM), erasable programmable read only memory (EPROM), electrically erasable programmable read only memory (EEPROM), or flash memory.

The host interface 311 may transmit/receive packets to/from the host 20. A packet transmitted from the host 20 to the host interface 311 may include a command and data to be written to the non-volatile memory 320 or a storage space in the storage controller 310 (for example, the ROM 316 or the buffer memory 315), and a packet transmitted from the host interface 311 to the host 20 may include a response to the command or data read from the non-volatile memory 320.

The memory interface 312 may transmit data to be written in the non-volatile memory 320 to the non-volatile memory 320 or may receive data read from the non-volatile memory 320. The memory interface 312 may comply with standard protocols such as Toggle or ONFI.

The processor 313 may further include a hardware accelerator designed to perform a predefined (or, alternatively, desired or selected) operation at high speed, an input/output (I/O) interface providing a communication channel for communication with external components, or the like. In some example embodiments, components of the processor 313 may be integrated on a single chip or single die, and the processor 313 may be referred to as an SoC. In some example embodiments, components of processor 313 may be integrated into two or more chips included in one package, and the processor 313 may be referred to as a system-in-package (SiP). The processor 313 may also be referred to as a micro control unit (MCU).

In some example embodiments, the processor 313 may execute instructions included in a software image such as a bootloader BL or firmware FW stored in the ROM 316. For example, at least some of the instructions included in the software image stored in the ROM 326 may be loaded on a cache memory or the buffer memory 315 included in the processor 313, and the processor 313 may execute the loaded instructions.

The ROM 316 may store a software image, in a non-volatile manner, that is executable by the processor 313. In some example embodiments, the ROM 316 may store the bootloader BL, including instructions to be preferentially executed by the processor 313 when power is supplied to the storage controller 310 or the storage controller 310 is reset, and the firmware FW to be executed by the bootloader BL. The firmware FW may include a flash translation layer (FTL), a host interface layer (HIL), or a flash interface layer (FIL).

The secure device 314 may store a certificate used to authenticate a device identifier DevID. The secure device 314 may store keys (for example, a first key KEY_{A} and a second key KEY_{B}) that are used for encrypting and decrypting data to be transmitted to the host 20 or data received from the host 20. The secure device 314 may store unique data, in a non-volatile manner, of the storage device 30. The secure device 314 may generate a compound device identifier (CDI) by using, as input values, unique information of the storage device 30 (for example, a unique device secret (UDS) value) and a software image (the firmware FW or the bootloader BL)). The secure device 314 may include a device identifier composition engine (DICE) based on a DICE standard.

The buffer memory 315 may temporarily store data to be used by the processor 313. For example, the buffer memory 315 may temporarily store data read from the ROM 316, the secure device 314, or the non-volatile memory 320, or may temporarily store data to be written into the ROM 316, the secure device 314, or the non-volatile memory 320. In addition, the buffer memory 315 may temporarily store instructions to be executed by the processor 313. In some example embodiments, the buffer memory 315 may include volatile memory providing a relatively high operating speed, such as dynamic random access memory (DRAM) or static random access memory (SRAM).

The firmware FW may perform several functions such as address mapping, wear-leveling, and garbage collection. The address mapping refers to an operation of translating a logical address received from the host 110 into a physical address used to actually store data in the non-volatile memory 320. The wear-leveling refers to a technique for preventing or reducing excessive deterioration of a specific block by uniformly using blocks of the non-volatile memory 320. For example, the wear-leveling may be implemented through a firmware technique of balancing erase counts of physical blocks. The garbage collection refers to a technique for securing the available capacity of the non-volatile memory 320 by copying valid data distributed to victim blocks to a new block and then erasing the victim blocks.

In some example embodiments, the storage controller 310 may obtain a new (or updated) software image and a second key KEY_{B} by decrypting a first ciphertext Enc1 received from the host 20 based on a first key KEY_{A}. Hereinafter, this may be described as updating the bootloader BL. However, example embodiments are not limited thereto. A description for the bootloader BL may be applied to any software image. A new bootloader BL may be stored in the ROM 316 and the second key KEY_{B} may be stored in the secure device 314.

The storage controller 310 may establish a secure session with the host 20 based on the second key KEY_{B} and may receive a certificate for a new device identifier DevID from the host 20 through the established secure session. The storage controller 310 may update the certificate for the device identifier DevID by storing the received certificate.

According to some example embodiments, the storage controller 310 and the host 20 may share the second key KEY_{B} before the certificate for the new device identifier DevID is renewed. The storage controller 310 and the host 20 may safely transmit/receive the certificate for the new device identifier DevID by establishing a secure session based on the shared second key KEY_{B}.

FIG. 5 is a diagram illustrating a device authentication architecture according to some example embodiments.

The device authentication architecture may include a secure device 314, a bootloader BL, and firmware FW. The bootloader BL may be referred to as a layer 0, and the firmware FW may be referred to as a layer 1. Hereinafter, operations of the bootloader BL or the firmware FW may be understood as operations of components of the storage controller 310 shown in FIG. 4 under control by the bootloader BL or the firmware FW.

In some example embodiments, the bootloader BL may generate a device identifier certificate signing request DevID CSR and may provide the device identifier certificate signing request DevID CSR to the host 20 (refer to FIG. 4) to receive a device identifier certificate DevID Cert from the host 20. In some example embodiments, the bootloader BL may generate a device identifier certificate DevID Cert by self-signing. In addition, the bootloader BL may generate an alias certificate (Alias Cert) based on the firmware FW, and may generate a certificate chain using the Alias Cert and a device identifier secret key DevIDₛ. In some example embodiments, a secret key may also be referred to as a private key.

Referring to FIG. 5, the secure device 314 may include a hash circuit 61. Whenever the storage device 30 (refer to FIG. 4) is reset or powered-up, the hash circuit 61 may generate a CDI by using a UDS value and the bootloader BL as input values. The hash circuit 61 may generate the CDI based on a hash-based message authentication code (HMAC). The UDS value may be provisioned at the time of manufacture and may be managed so as not to be disclosed to the outside. The UDS value may be determined based on a random number generated by a random number generator.

The bootloader BL may include an alias key generator 62, a DevID generator 63, an alias key certificate generator 64, a DevID certificate generator 65, and a DevID CSR generator 66. Components of the bootloader BL may be implemented with hardware, software, or a combination of hardware and software.

The DevID generator 63 may generate a device identifier key pair (DevID, and DevIDₚ) based on the CDI. In some example embodiments, the device identifier key pair (DevIDₛ and DevIDₚ) may be referred to as a device identifier DevID.

The DevID certificate generator 65 may generate a device identifier certificate DevID Cert based on a device identifier public key DevID,.

The DevID CSR generator 66 may generate a device identifier certificate signing request DevID CSR based on the device identifier secret key DevID, and the device identifier public key DevID,. The device identifier certificate signing request DevID CSR may be provided to the host 20, and the host 20 may send a device identifier certificate DevID Cert corresponding to the device identifier certificate signing request DevID CSR to the storage device 30. The storage device 30 may store the device identifier certificate DevID Cert in a secure memory inside the secure device 314.

The alias key generator 62 may generate an alias key pair (Aliasₛ and Aliasₚ) based on the CDI and a firmware (FW) image digest. The FW image digest may refer to a hash value of the firmware FW.

Referring to FIG. 5, because the device identifier DevID is changed when the bootloader BL is updated, the device identifier certificate DevID Cert previously stored in the secure device 314 may be invalid.

Therefore, the storage device 30 may need to receive a new device identifier certificate DevID Cert corresponding to a new device identifier DevID from the host 20.

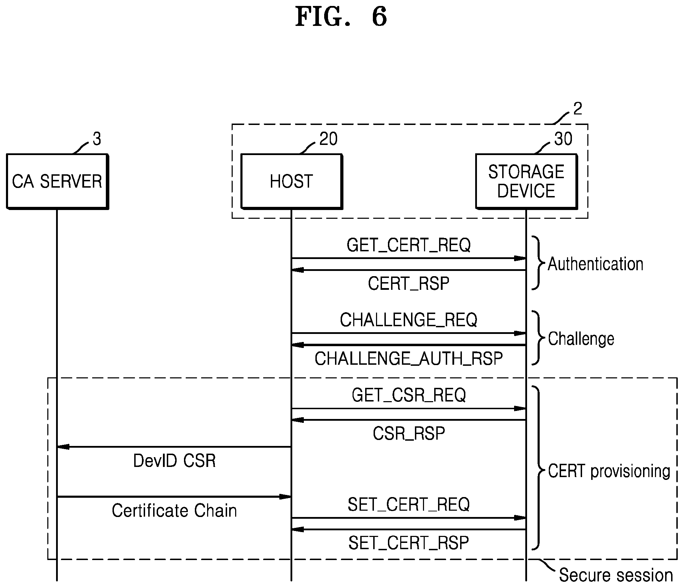

FIG. 6 is a diagram illustrating a method of operating the storage system 2 according to some example embodiments.

Referring to FIG. 6, the host 20 may authenticate the storage device 30 through an authentication operation or a challenge operation. The host 20 may provide a certificate to the storage device 30 through a certificate provisioning operation. The certificate provisioning operation may be performed in a secure session.

In the authentication operation, the host 20 may provide a certificate request GET_CERT_REQ to the storage device 30. The storage device 30 may provide a certificate response CERT_RSP including a certificate chain to the host 20 in response to the certificate request GET_CERT_REQ. The certificate chain may include a device identifier certificate DevID Cert. The host 20 may determine the validity of certificates by verifying signatures in the certificate chain. The host 20 may obtain a device identifier public key in a valid certificate.

In the challenge operation, the host 20 may provide a challenge request CHALLENGE_REQ to the storage device 30. The challenge request CHALLENGE_REQ may include a random value. In response to the challenge request CHALLENGE_REQ, the storage device 30 may provide the host 20 with a challenge response CHALLENGE_AUTH_RSP that includes a hash value of the certificate chain including a signature for the random value. The host 20 may authenticate the storage device 30 by verifying the signature for the random value based on the device identifier public key.

In the certificate provisioning operation, the host 20 may provide a CSR request GET_CSR_REQ to the storage device 30. The storage device 30 may provide a device identifier certificate signing request DevID CSR (described with reference to FIG. 5) to the host 20 as a CSR response CSR_RSP. The device identifier certificate signing request DevID CSR may include a device identifier public key (DevIDₚ) and various pieces of information for identifying the storage device 30.

The host 20 may provide the device identifier certificate signing request DevID CSR to a certificate authority (CA) server 3, and the CA server 3 may generate a certificate chain by signing the device identifier certificate signing request DevID CSR based on a plurality of secret keys. The CA server 3 may provide the certificate chain to the host 20. The host 20 may store the certificate chain in the storage device 30 by providing the storage device 30 with a certificate set request SET_CERT_REQ including the certificate chain. The storage device 30 may provide a certificate set response SET_CERT_RSP to the host 20 to inform that the certificate chain has been stored.

The certificate provisioning operation may be performed in a secure session through encryption and decryption based on a pre-shared key between the host 20 and the storage device 30.

In general, a manufacturer may manufacture a plurality of storage devices and may provide one of the plurality of storage devices to a producer as the storage device 30. The manufacturer may provision unique keys into the plurality of storage devices, respectively. The producer may receive the storage device 30 from the manufacturer and may produce the storage system 2 by connecting the host 20 and the storage device 30 to each other.

In a comparative embodiment, the host 20 may manage all keys of the plurality of storage devices so that a pre-shared key is provided before a secure session is established between the host 20 and the storage device 30. In this case, however, the host 20 may have a heavy key management burden, and the unique keys of all the plurality of storage devices may be hacked by an attack on the host 20.

According to some example embodiments, in the system 1, a common key is provided to the host 20 and the storage device 30 while a software image is updated, and thus a certificate provisioning operation may be performed in the secure session based on the common key (pre-shared key). Thus, the updated software image may be more securely relied upon.

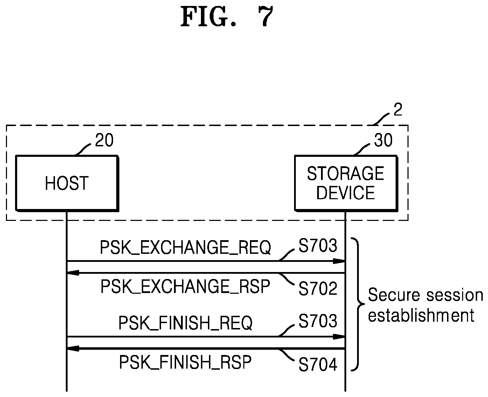

FIG. 7 is a diagram illustrating secure session establishment operations according to some example embodiments.

Referring to FIG. 7, the host 20 may provide a request PSK_EXCHANGE_REQ instructing the storage device 30 to establish a secure session to the storage device 30 (operation S703). The request PSK_EXCHANGE_REQ may include a random value. In some example embodiments, the request PSK_EXCHANGE_REQ may include hint information indicating a pre-shared key, that is, a second key KEY_{B}.

The storage device 30 may provide a response PSK_EXCHANGE_RSP including a first hash value encrypted based on the second key KEY_{B} to the host 20 in response to the request PSK_EXCHANGE_REQ (operation S702). For example, the storage device 30 may generate the first hash value by encrypting, based on the second key KEY_{B}, data previously shared with the host 20.

The host 20 may provide a request PSK_FINISH_REQ including a second hash value encrypted based on the second key KEY_{B} to the storage device 30 (operation S703). For example, the host 20 may generate the second hash value by encrypting, based on the second key KEY_{B}, data previously shared with the storage device 30. When it is verified that the first hash value and the second hash value are generated based on the same key, the host 20 may provide a request PSK_FINISH_REQ to the storage device 30.

The storage device 30 may provide a response PSK_FINISH _RSP indicating establishment of a secure session to the host 20 (operation S704). For example, the storage device 30 may compare the first hash value and the second hash value with each other, and when it is verified that the first hash value and the second hash value are generated based on the same key, the storage device 30 may provide the response PSK_FINISH_RSP to the host 20.

Through these operations, the secure session may be established between the host 20 and the storage device 30. Subsequent operations (for example, the certificate provisioning operation described with reference to FIG. 6) may be performed based on encryption and decryption using the second key KEY_{B}.

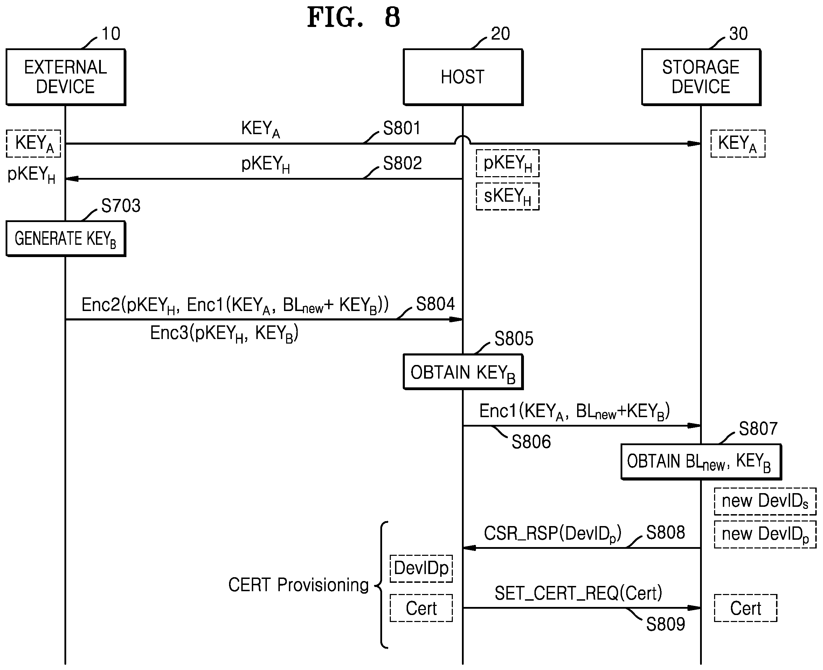

FIG. 8 is a diagram illustrating a method of operating the system 1 according to some example embodiments.

When the storage device 30 is manufactured, the external device 10 may provision a first key KEY_{A} into the storage device 30 (operation S801). The storage device 30 may store the first key KEY_{A} in the secure memory such that the first key KEY_{A} may not be disclosed to the outside.

The host 20 may provide a public key pKEY_{H} associated with a unique secret key sKEY_{H} to the external device 10 (operation S802). The host 20 may store the secret key sKEYₙ and the public key pKEY_{H} in the secure memory of the host 20.

The external device 10 may generate a second key KEY_{B} (operation S703). The second key KEY_{B} may be set to be valid while a secure session is established between the host 20 and the storage device 30.

The external device 10 may provide a second ciphertext Enc2 and a third ciphertext Enc3 to the host 20 (operation S804). For example, the external device 10 may generate a first ciphertext Encl by encrypting a new bootloader BL_{new} and a second key KEY_{B} based on the first key KEY_{A}, the second ciphertext Enc2 by encrypting the first ciphertext Enc1 based on the public key pKEY_{H}, and the third ciphertext Enc3 by encrypting the second key KEY_{B} based on the public key pKEY_{H}. The term "bootloader BL" may refer to a software image that is first executed when the storage device 30 is reset or when the storage device 30 is powered on.

In some example embodiments, the external device 10 does not generate the second ciphertext Enc2 and the third ciphertext Enc3 separately, but may generate one ciphertext by commonly encrypting the first ciphertext Enc1 and the second key KEY_{B} based on the public key pKEY_{H}.

The host 20 may obtain the second key KEY_{B} by decrypting the third ciphertext Enc3 based on the secret key sKEY_{H} (operation S805). The host 20 may store the second key KEY_{B} in the secure memory of the host 20.

The host 20 may obtain the first ciphertext Enc1 by decrypting the second ciphertext Enc2 based on the secret key sKEY_{H}, and may provide the first ciphertext Enc1 to the storage device 30 (operation S806).

The storage device 30 may obtain the new bootloader BL_{new} and the second key KEY_{B} by decrypting the first ciphertext Enc1 based on the first key KEY_{A} (operation S807). The storage device 30 may store the new bootloader BL_{new} in the ROM 316 (refer to FIG. 4) and store the second key KEY_{B} in the secure device 314 (refer to FIG. 4).

As described above with reference to FIG. 5, the storage device 30 may generate a new device identifier secret key DevID, and a new device identifier public key DevID, based on the new bootloader BL_{new}. Therefore, authentication using an existing device identifier certificate may fail, and a certificate provisioning operation may be performed. Some operations described above with reference to FIG. 6 may be omitted.

The storage device 30 may provide a CSR response CSR_RSP including the new device identifier public key DevIDₚ in response to a CSR request GET_CSR_REQ from the host 20 (operation S808). In some example embodiments, the storage device 30 may encrypt the CSR response CSR_RSP based on the second key KEY_{B} and may provide the encrypted CSR response CSR_RSP to the host 20. The host 20 may decrypt the encrypted CSR response CSR_RSP based on the second key KEY_{B}.

Although not shown in FIG. 8, the host 20 may provide a CSR to the CA server 3 and may receive a new certificate chain Cert from the CA server 3 as described above with reference to FIG. 6. The new certificate chain Cert may include a device identifier certificate DevID Cert, a root CA certificate, and an intermediate CA certificate.

The host 20 may provide a certificate set request SET_CERT_REQ including the new certificate chain Cert to the storage device 30 S809. The host 20 may encrypt the certificate set request SET_CERT_REQ based on the second key KEY_{B} and may provide the encrypted certificate set request SET_CERT_REQ to the storage device 30. The storage device 30 may decrypt the encrypted certificate set request SET_CER_REQ based on the second key KEY_{B}.

The storage device 30 may store the new certificate chain Cert in the secure device 314. The new certificate chain Cert may be stored in a slot of the secure device 314.

Although FIG. 8 illustrates that the CSR response CSR_RSP and the certificate set request SET_CERT_REQ are encrypted and decrypted based on the second key KEY_{B}, example embodiments are not limited thereto. For example, at least one operation included in the authentication operation, the challenge operation, or the certificate provisioning operation described with reference to FIG. 6 may be performed based on the second key KEY_{B}.

According to some example embodiments, the host 20 and the storage device 30 may share the second key KEY_{B} in the process of updating a new bootloader BL_{new}. The host 20 and the storage device 30 may establish a secure session based on the second key KEY_{B} and may perform a certificate provisioning operation within the secure session.

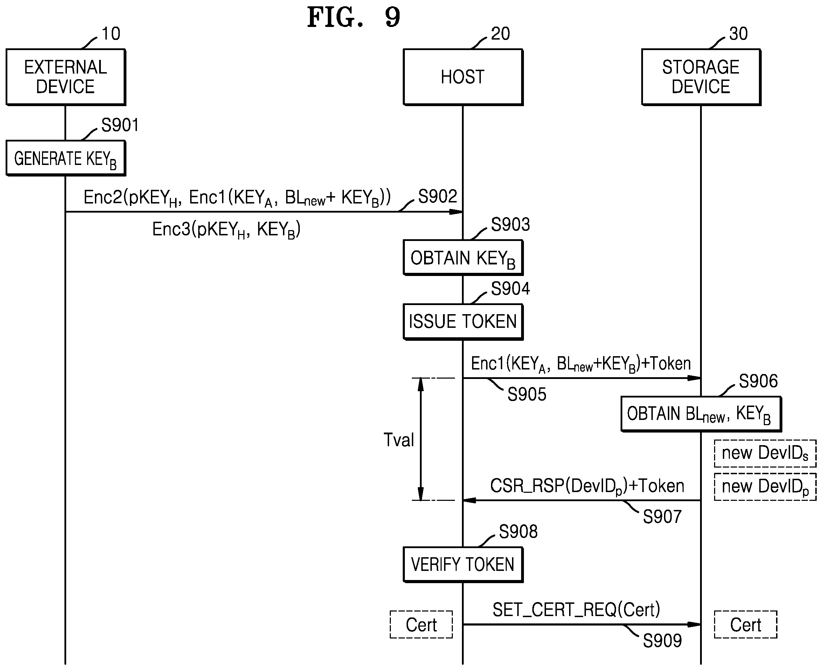

FIG. 9 is a diagram illustrating a method of operating the system 1 according to some example embodiments.

Operations S901, S902, and S903 shown in FIG. 9 may correspond to operations S703, S804, and S805 shown in FIG. 8, respectively. Descriptions of the same operations as described above with reference to FIG. 8 may be omitted. Although not shown in FIG. 9, operations S801 and S802 shown in FIG. 8 may be performed before operation S901.

The host 20 may issue a token that is valid for a given period of time (operation S904). The token may include information NotBefore indicating the start time of a valid time period Tval, information NotAfter indicating the end time of the valid time period Tval, and identification information on a storage device set to receive the token. The token may be valid for the valid time period Tval.

The host 20 may provide a first ciphertext Enc1 and the token to the storage device 30 (operation S905). In some example embodiments, the storage device 30 may reset the information NotBefore indicating the start time of the valid time period Tval and the information NotAfter indicating the end time of the valid time period Tval. That is, the storage device 30 may set the start time of the valid time period Tval of the token to be the time at which the storage device 30 receives the token. The token may be valid for the valid time period Tval. In some example embodiments, the host 20 may encrypt the token based on a first key KEY_{A} and may provide the encrypted token to the storage device 30. In some example embodiments, the storage device 30 may obtain the token by decrypting the encrypted token based on the first key KEY_{A}.

The storage device 30 may obtain a new bootloader BL_{new} and a second key KEY_{B} by decrypting the first ciphertext Enc1 based on the first key KEY_{A} (operation S906).

The storage device 30 may provide the token and a CSR response CSR_RSP including a new device identifier public key DevIDₚ to the host 20 (operation S907). In some example embodiments, the storage device 30 may encrypt the CSR response CSR_RSP and the token based on the second key KEY_{B} and may provide the encrypted data to the host 20.

The host 20 may obtain the CSR response CSR_RSP and the token by decrypting the received data based on the second key KEY_{B}. The host 20 may verify the token to verify whether the CSR response CSR_RS is received within the valid time period Tval (operation S908). When the CSR response CSR_RSP is received within the valid time period Tval, operation S909 may be performed, and when the CSR response CSR_RSP is not received within the valid time period Tval, operation S909 may not be performed.

In some example embodiments, the valid time period Tval may refer to a time period between a time at which the storage device 30 receives the token and a time at which the storage device 30 provides the token to the host 20. In some example embodiments, the validity time interval Tval may refer to a time period between a time at which the host 20 provides the token to the storage device 30 and a time at which the host 20 receives the token from the storage device 30.

The host 20 may encrypt a certificate set request SET_CERT_REQ including a certificate chain Cert based on the second key KEYs and may provide the encrypted data to the storage device 30 (operation S909).

According to some example embodiments, after the valid time period Tval elapses, the certificate chain Cert is not provided to the storage device 30, thereby reducing the possibility of certificate theft.

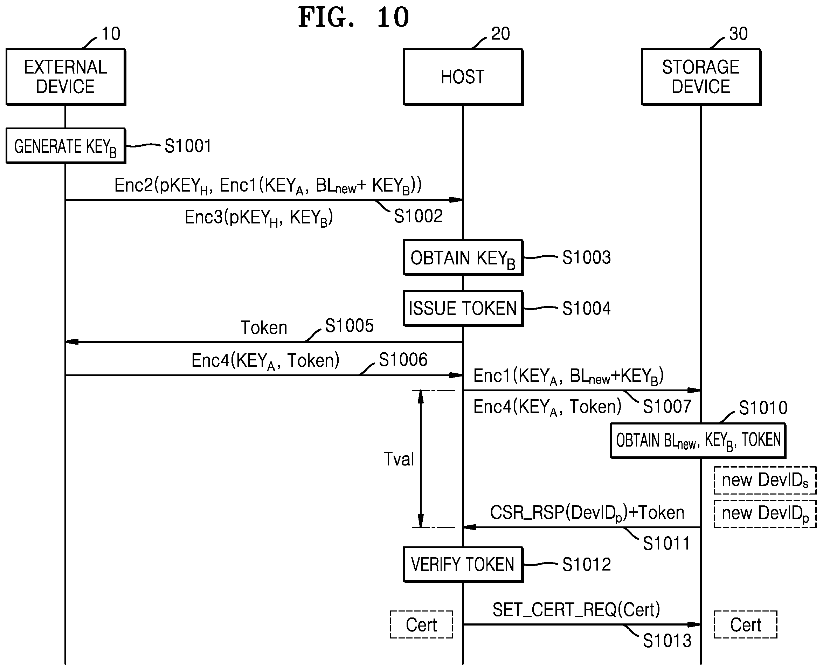

FIG. 10 is a diagram illustrating a method of operating the system 1 according to some example embodiments.

Operations S1001, S1002, S1003, and S1004 shown in FIG. 10 may correspond to operations S901, S902, S903, and S904 shown in FIG. 9, respectively. The same description as given above with reference to FIG. 8 or 9 may be omitted.

The host 20 may provide a token to the external device 10 (operation S1005).

The external device 10 may generate a fourth ciphertext Enc4 by encrypting the token based on a first key KEY_{A}, and may provide the fourth ciphertext Enc4 to the host 20 (operation S1006). The first key KEY_{A} may be a key provisioned into the storage device 30 when the storage device 30 is manufactured.

A first ciphertext Enc1 and the fourth ciphertext Enc4 may be provided to the storage device 30 (operation S1007). Because the token is transmitted/received between the host 20 and the storage device 30 in an encrypted state, confidentiality of the token may be secured.

The storage device 30 may obtain a new bootloader BL_{new}, a second key KEY_{B}, and the token by decrypting the first ciphertext Enc1 and the fourth ciphertext Enc4 based on the first key KEY_{A} (operation S1010).

Operations S1011 to S1013 may correspond to operations S907 to S909 shown in FIG. 9.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

While the inventive concepts have been particularly shown and described with reference to example embodiments thereof, it will be understood that various changes in form and details may be made therein without departing from the scope of the following claims.

## Claims

1. A system comprising:
a storage device (30) configured to execute a software image (IMG);
a first device (20) storing a first secret key (sKEY_{H}) and a first public key (pKEY_{H}) associated with the first secret key; and
a second device (10) configured to
store a first key (KEY_{A}) and a second key (KEY_{B}),
receive the first public key (pKEY_{H}) from the first device (20),
generate a first ciphertext (Enc1) for an updated software image (IMG) and the second key (KEY_{B}), based on the first key (KEY_{A}),
generate a second ciphertext (Enc2) for the first ciphertext (Enc1) and the second key (KEY_{B}), based on the first public key (pKEY_{H}), and
provide the second ciphertext (Enc2) to the first device (20),
the first device (20) being configured to obtain the first ciphertext (Enc1) and the second key (KEY_{B}) by decrypting the second ciphertext (Enc2) based on the first secret key (sKEY_{H}) and provide the first ciphertext (Enc1) to the storage device (30),
the storage device (30) being further configured to obtain the updated software image (IMG) and the second key (KEY_{B}) by decrypting the first ciphertext (Enc1) based on the first key (KEY_{A}), and establish a secure session between the first device and the storage device based on the second key, and
the first device (20) being further configured to provision via the secure session, based on the second key (KEY_{B}), a certificate for a unique key of the storage device into the storage device.

2. The system of claim 1, wherein
the first device (20) is further configured to generate a third ciphertext by encrypting the certificate based on the second key (KEY_{B}), and
the storage device (30) is further configured to obtain the certificate by decrypting the third ciphertext based on the second key (KEY_{B}).

3. The system of claim 2, wherein
the first device (20) is further configured to transmit, to the storage device (30), the second ciphertext (Enc2) and token information that is valid for a reference time period, and
the first device (20) is further configured to provide the third ciphertext to the storage device if the first device receives the unique key and the token information from the storage device within the reference time period.

4. The system of claim 3, wherein
the first device (20) is further configured to provide the token information to the second device (30),
the second device (30) is further configured to generate a fourth ciphertext by encrypting the token information based on the first key (KEY_{A}) and provide the fourth ciphertext to the storage device (30) via the first device (20), and
the storage device (30) is further configured to obtain the token information by decrypting the fourth ciphertext based on the first key (KEY_{A}).

5. The system of any one of the preceding claims, wherein
the storage device (30) is further configured to encrypt a certificate signing request comprising the unique key based on the second key (KEY_{B}) and provide the encrypted certificate signing request to the first device (20),
the first device (20) is further configured to decrypt the encrypted certificate signing request based on the second key (KEY_{B}), encrypt a certificate chain comprising a plurality of signatures related to the certificate signing request, based on the second key (KEY_{B}), and provide the encrypted certificate chain to the storage device (30), and
the storage device (30) is further configured to decrypt the encrypted certificate chain based on the second key (KEY_{B}) and store the certificate chain.

6. The system of any one of the preceding claims, wherein
the first key (KEY_{A}) is included in the storage device (30) at a time the storage device is manufactured, and
the second key (KEY_{B}) is valid until the certificate is stored in the storage device (30).

7. The system of any one of the preceding claims, wherein the storage device (30) is further configured to generate the unique key based on a hash value for the updated software image (IMG).

8. The system of any one of the preceding claims, wherein the software image (IMG) comprises a bootloader that is first executed based on the storage device (30) booting.

9. A method of operating a system, the system comprising a storage device storing a first key (KEY_{A}) and configured to execute a software image (IMG), a first device configured to control the storage device, and a second device configured to generate the software image (IMG) and storing the first key (KEY_{A}), the method comprising:
at the second device,
receiving (S802) from the first device a first public key (pKEY_{H}) and generating a first ciphertext (Enc1) for an updated software image and a second key (KEY_{B}), based on the first key (KEY_{A}),
generating a second ciphertext (Enc2) for the first ciphertext (Enc1) and the second key (KEY_{B}), based on the first public key (pKEY_{H}), and
providing (S802) the second ciphertext (Enc2) to the first device;
at the first device, obtaining (S805) the first ciphertext (Enc1) and the second key (KEY_{B}) by decrypting the second ciphertext (Enc2) based on a first secret key (sKEY_{H}) and providing (S806) the first ciphertext (Enc1) and the second key (KEY_{B}) to the storage device;
at the storage device, obtaining (S807) the updated software image and the second key (KEY_{B}) by decrypting the first ciphertext (Enc1) based on the first key (KEY_{A}), and establishing a secure session between the first device and the storage device based on the second key (KEY_{B}); and
at the first device, provisioning (S809) via the secure session, based on the second key (KEY_{B}), a certificate for a unique key of the storage device into the storage device.

10. The method of claim 9, wherein the establishing of the secure session comprises:
providing (S703), by the first device, a first request for the establishing of the secure session to the storage device;
providing (S702), by the storage device, the first device with a first response comprising a first hash value generated based on the second key for data;
comparing, by the first device, the first hash value with a second hash value generated based on the second key for the data, and transmitting (S703), by the first device, a second request comprising the second hash value to the storage device; and
comparing, by the storage device, the first hash value with the second hash value, and providing (S704), by the storage device, a second response indicating completion of the establishing of the secure session to the first device.

11. The method of claim 10, wherein the provisioning of the certificate into the storage device comprises:
generating, by the first device, a second ciphertext by encrypting the certificate based on the second key;
providing, by the first device, the second ciphertext to the storage device; and
obtaining, by the storage device, the certificate by decrypting the second ciphertext based on the second key.

12. The method of claim 11, further comprising:
transmitting, by the first device, token information that is valid for a reference time period and the first ciphertext to the storage device;
providing, by the first device, the second ciphertext to the storage device based on the first device receiving the unique key and the token information from the storage device within the reference time period.

13. The method of claim 12, further comprising:
providing, by the first device, the token information to the second device;
providing, by the second device, a third ciphertext generated by encrypting the token information based on the first key to the storage device via the first device; and
obtaining, by the storage device, the token information by decrypting the third ciphertext based on the first key.

14. The method of any one of claims 9 to 13, wherein
the first key is included in the storage device at a time the storage device is manufactured, and
the second key is valid until the certificate is stored in the storage device.

15. The method of any one of claims 9 to 14, further comprising generating, by the storage device, the unique key based on the updated software image.

## Patentansprüche

1. System, umfassend:
eine Speichervorrichtung (30), die zum Ausführen eines Software-Images (IMG) konfiguriert ist;
eine erste Vorrichtung (20), die einen ersten geheimen Schlüssel (sKEY_{H}) und einen ersten öffentlichen Schlüssel (pKEY_{H}), der mit dem ersten geheimen Schlüssel verknüpft ist, speichert; und
eine zweite Vorrichtung (10), die dafür konfiguriert ist,
einen ersten Schlüssel (KEY_{A}) und einen zweiten Schlüssel (KEY_{B}) zu speichern,
den ersten öffentlichen Schlüssel (pKEY_{H}) von der ersten Vorrichtung (20) zu empfangen,
einen ersten Chiffretext (Enc1) für ein aktualisiertes Software-Image (IMG) und den zweiten Schlüssel (KEY_{B}) basierend auf dem ersten Schlüssel (KEY_{A}) zu erzeugen,
einen zweiten Chiffretext (Enc2) für den ersten Chiffretext (Enc1) und den zweiten Schlüssel (KEY_{B}) basierend auf dem ersten öffentlichen Schlüssel (pKEY_{H}) zu erzeugen und
den zweiten Chiffretext (Enc2) für die erste Vorrichtung (20) bereitzustellen,
wobei die erste Vorrichtung (20) dafür konfiguriert ist, den ersten Chiffretext (Enc1) und den zweiten Schlüssel (KEY_{B}) durch Entschlüsseln des zweiten Chiffretexts (Enc2) auf Grundlage des ersten geheimen Schlüssels (sKEY_{H}) zu erhalten und den ersten Chiffretext (Enc1) für die Speichervorrichtung (30) bereitzustellen,
wobei die Speichervorrichtung (30) weiter dafür konfiguriert ist, das aktualisierte Software-Image (IMG) und den zweiten Schlüssel (KEY_{B}) durch Entschlüsseln des ersten Chiffretextes (Enc1) auf Grundlage des ersten Schlüssels (KEY_{A}) zu erhalten und eine sichere Sitzung zwischen der ersten Vorrichtung und der Speichervorrichtung auf Grundlage des zweiten Schlüssels herzustellen, und
wobei die erste Vorrichtung (20) weiter dafür konfiguriert ist, über die sichere Sitzung, auf Grundlage des zweiten Schlüssels (KEY_{B}), ein Zertifikat für einen eindeutigen Schlüssel der Speichervorrichtung, in die Speichervorrichtung bereitzustellen.

2. System nach Anspruch 1, wobei
die erste Vorrichtung (20) weiter dafür konfiguriert ist, durch Verschlüsseln des Zertifikats auf Grundlage des zweiten Schlüssels (KEY_{B}) einen dritten Chiffretext zu erzeugen, und
die Speichervorrichtung (30) weiter dafür konfiguriert ist, das Zertifikat durch Entschlüsseln des dritten Chiffretextes auf Grundlage des zweiten Schlüssels (KEY_{B}) zu erhalten.

3. System nach Anspruch 2, wobei
die erste Vorrichtung (20) weiter dafür konfiguriert ist, den zweiten Chiffretext (Enc2) und Token-Informationen, die für einen Referenzzeitraum gültig sind, an die Speichervorrichtung (30) zu übermitteln, und
die erste Vorrichtung (20) weiter dafür konfiguriert ist, den dritten Chiffretext für die Speichervorrichtung bereitzustellen, falls die erste Vorrichtung innerhalb des Referenzzeitraums den eindeutigen Schlüssel und die Token-Informationen von der Speichervorrichtung empfängt.

4. System nach Anspruch 3, wobei
die erste Vorrichtung (20) weiter dafür konfiguriert ist, die Token-Informationen für die zweite Vorrichtung (30) bereitzustellen,
die zweite Vorrichtung (30) weiter dafür konfiguriert ist, durch Verschlüsseln der Token-Informationen auf Grundlage des ersten Schlüssels (KEY_{A}) einen vierten Chiffretext zu erzeugen und den vierten Chiffretext über die erste Vorrichtung (20) für die Speichervorrichtung (30) bereitzustellen,
die Speichervorrichtung (30) weiter dafür konfiguriert ist, die Token-Informationen durch Entschlüsseln des vierten Chiffretextes auf Grundlage des ersten Schlüssels (KEY_{A}) zu erhalten.

5. System nach einem der vorstehenden Ansprüche, wobei
die Speichervorrichtung (30) weiter dafür konfiguriert ist, eine Zertifikatsignierungsanforderung, die den eindeutigen Schlüssel auf Grundlage des zweiten Schlüssels (KEY_{B}) umfasst, zu verschlüsseln und die verschlüsselte Zertifikatsignierungsanforderung für die erste Vorrichtung (20) bereitzustellen,
die erste Vorrichtung (20) weiter dafür konfiguriert ist, die verschlüsselte Zertifikatsignierungsanforderung auf Grundlage des zweiten Schlüssels (KEY_{B}) zu entschlüsseln, eine Zertifikatskette, die eine Vielzahl von Signaturen umfasst, die sich auf die Zertifikatsignierungsanforderung beziehen, auf Grundlage des zweiten Schlüssels (KEY_{B}) zu verschlüsseln und die verschlüsselte Zertifikatskette für die Speichervorrichtung (30) bereitzustellen, und
die Speichervorrichtung (30) weiter dafür konfiguriert ist, die verschlüsselte Zertifikatskette auf Grundlage des zweiten Schlüssels (KEY_{B}) zu entschlüsseln und die Zertifikatskette zu speichern.

6. System nach einem der vorstehenden Ansprüche, wobei
der erste Schlüssel (KEY_{A}) zu einem Zeitpunkt, zu dem die Speichervorrichtung (30) hergestellt wird, eingeschlossen wird und
der zweite Schlüssel (KEY_{B}) gültig ist, bis das Zertifikat in der Speichervorrichtung (30) gespeichert ist.

7. System nach einem der vorstehenden Ansprüche, wobei die Speichervorrichtung (30) weiter dafür konfiguriert ist, den eindeutigen Schlüssel auf Grundlage eines Hashwerts für das aktualisierte Software-Image (IMG) zu erzeugen.

8. System nach einem der vorstehenden Ansprüche, wobei das Software-Image (IMG) einen Bootloader umfasst, der zuerst auf Grundlage dessen ausgeführt wird, dass die Speichervorrichtung (30) bootet.

9. Verfahren zum Betreiben eines Systems, wobei das System eine Speichervorrichtung, die einen ersten Schlüssel (KEY_{A}) speichert und zum Ausführen eines Software-Images (IMG) konfiguriert ist, eine erste Vorrichtung, die zum Steuern der Speichervorrichtung konfiguriert ist, und ein zweite Vorrichtung, die zum Erzeugen des Software-Images (IMG) und Speichern des ersten Schlüssels (KEY_{A}) konfiguriert ist, umfasst, wobei das Verfahren Folgendes umfasst:
bei der zweiten Vorrichtung
Empfangen (S802) von der ersten Vorrichtung eines ersten öffentlichen Schlüssels (pKEY_{H}) und Erzeugen eines ersten Chiffretexts (Enc1) für ein aktualisiertes Software-Image und eines zweiten Schlüssels (KEY_{B}), basierend auf dem ersten Schlüssel (KEY_{A}),
Erzeugen eines zweiten Chiffretextes (Enc2) für den ersten Chiffretext (Enc1) und den zweiten Schlüssel (KEY_{B}), basierend auf dem ersten öffentlichen Schlüssel (pKEY_{H}), und
Bereitstellen (S802) des zweiten Chiffretextes (Enc2) für die erste Vorrichtung;
bei der ersten Vorrichtung, Erhalten (S805) des ersten Chiffretexts (Enc1) und des zweiten Schlüssels (KEY_{B}) durch Entschlüsseln des zweiten Chiffretexts (Enc2) auf Grundlage eines ersten geheimen Schlüssels (sKEY_{H}) und Bereitstellen (S806) des ersten Chiffretexts (Enc1) und des zweiten Schlüssels (KEY_{B}) für die Speichervorrichtung;
bei der Speichervorrichtung, Erhalten (S807) des aktualisierten Software-Images und des zweiten Schlüssels (KEY_{B}) durch Entschlüsseln des ersten Chiffretextes (Enc1) basierend auf dem ersten Schlüssel (KEY_{A}) und Herstellen einer sicheren Sitzung zwischen der ersten Vorrichtung und der Speichervorrichtung basierend auf dem zweiten Schlüssel (KEY_{B}) und
bei der ersten Vorrichtung, Bereitstellen (S809) über die sichere Sitzung, basierend auf dem zweiten Schlüssel (KEY_{B}), eines Zertifikats für einen eindeutigen Schlüssel der Speichervorrichtung in die Speichervorrichtung.

10. Verfahren nach Anspruch 9, wobei das Herstellen der sicheren Sitzung Folgendes umfasst:
Bereitstellen (S703), durch die erste Vorrichtung, einer ersten Anforderung zum Herstellen der sicheren Sitzung für die Speichervorrichtung;
Versehen (S702), durch die Speichervorrichtung, der ersten Vorrichtung mit einer ersten Antwort, die einen ersten Hashwert umfasst, der auf Grundlage des zweiten Schlüssels für Daten erzeugt wird;
Vergleichen, durch die erste Vorrichtung, des ersten Hashwerts mit einem zweiten Hashwert, der auf Grundlage des zweiten Schlüssels für die Daten erzeugt wird, und Übermitteln (S703), durch die erste Vorrichtung, einer zweiten Anforderung, die den zweiten Hashwert umfasst, an die Speichervorrichtung und
Vergleichen, durch die Speichervorrichtung, des ersten Hashwerts mit dem zweiten Hashwert und Bereitstellen (S704) einer zweiten Antwort, die den Abschluss des Herstellens der sicheren Sitzung anzeigt, für die erste Vorrichtung.

11. Verfahren nach Anspruch 10, wobei das Bereitstellen des Zertifikats in die Speichervorrichtung Folgendes umfasst:
Erzeugen, durch die erste Vorrichtung, eines zweiten Chiffretextes durch Verschlüsseln des Zertifikats auf Grundlage des zweiten Schlüssels;
Bereitstellen, durch die erste Vorrichtung, des zweiten Chiffretextes für die Speichervorrichtung und
Erhalten, durch die Speichervorrichtung, des Zertifikats durch Entschlüsseln des zweiten Chiffretextes auf Grundlage des zweiten Schlüssels.

12. Verfahren nach Anspruch 11, weiter umfassend:
Übermitteln, durch die erste Vorrichtung, von Token-Informationen, die für einen Referenzzeitraum gültig sind, und des ersten Chiffretextes an die Speichervorrichtung;
Bereitstellen, durch die erste Vorrichtung, des zweiten Chiffretextes für die Speichervorrichtung, basierend darauf, dass die erste Vorrichtung innerhalb des Referenzzeitraums den eindeutigen Schlüssel und die Token-Informationen von der Speichervorrichtung empfängt.

13. Verfahren nach Anspruch 12, weiter umfassend:
Bereitstellen, durch die erste Vorrichtung, der Token-Informationen für die zweite Vorrichtung;
Bereitstellen, durch die zweite Vorrichtung, eines dritten Chiffretextes, der durch Verschlüsseln der Token-Informationen auf Grundlage des ersten Schlüssels erzeugt wird, über die erste Vorrichtung für die Speichervorrichtung und
Erhalten, durch die Speichervorrichtung, der Token-Informationen durch Entschlüsseln des dritten Chiffretextes auf Grundlage des ersten Schlüssels.

14. Verfahren nach einem der Ansprüche 9 bis 13, wobei
der erste Schlüssel zu einem Zeitpunkt, zu dem die Speichervorrichtung hergestellt wird, eingeschlossen wird und
der zweite Schlüssel gültig ist, bis das Zertifikat in der Speichervorrichtung gespeichert ist.

15. Verfahren nach einem der Ansprüche 9 bis 14, weiter umfassend das Erzeugen, durch die Speichervorrichtung, des eindeutigen Schlüssels auf Grundlage des aktualisierten Software-Images.

## Revendications

1. Système comprenant :
un dispositif de stockage (30) configuré pour exécuter une image logicielle (IMG) ;
un premier dispositif (20) stockant une première clé secrète (sKEY_{H}) et une première clé publique (pKEY_{H}) associée à la première clé secrète ; et
un second dispositif (10) configuré pour
stocker une première clé (KEY_{A}) et une seconde clé (KEY_{B}),
recevoir la première clé publique (pKEY_{H}) du premier appareil (20),
générer un premier texte chiffré (Enc1) pour une image logicielle mise à jour (IMG) et la seconde clé (KEY_{B}), sur la base de la première clé (KEY_{A}),
générer un deuxième texte chiffré (Enc2) pour le premier texte chiffré (Enc1) et la seconde clé (KEY_{B}), sur la base de la première clé publique (pKEY_{H}), et
fournir le deuxième texte chiffré (Enc2) au premier dispositif (20),
le premier dispositif (20) étant configuré pour obtenir le premier texte chiffré (Enc1) et la seconde clé (KEY_{B}) en déchiffrant le deuxième texte chiffré (Enc2) sur la base de la première clé secrète (sKEY_{H}) et fournir le premier texte chiffré (Enc1) au dispositif de stockage (30),
le dispositif de stockage (30) étant en outre configuré pour obtenir l'image logicielle mise à jour (IMG) et la seconde clé (KEY_{B}) en déchiffrant le premier texte chiffré (Enc1) sur la base de la première clé (KEY_{A}) et établir une session sécurisée entre le premier dispositif et le dispositif de stockage sur la base de la seconde clé, et
le premier dispositif (20) étant en outre configuré pour mettre en place via la session sécurisée, sur la base de la seconde clé (KEY_{B}), un certificat pour une clé unique du dispositif de stockage dans le dispositif de stockage.

2. Système selon la revendication 1, dans lequel
le premier dispositif (20) est en outre configuré pour générer un troisième texte chiffré en chiffrant le certificat sur la base de la seconde clé (KEY_{B}), et
le dispositif de stockage (30) est en outre configuré pour obtenir le certificat en déchiffrant le troisième texte chiffré sur la base de la seconde clé (KEY_{B}).

3. Système selon la revendication 2, dans lequel
le premier dispositif (20) est en outre configuré pour transmettre, au dispositif de stockage (30), le deuxième texte chiffré (Enc2) et des informations de jeton qui sont valides pour une période de référence, et
le premier dispositif (20) est en outre configuré pour fournir le troisième texte chiffré au dispositif de stockage si le premier dispositif reçoit la clé unique et les informations de jeton du dispositif de stockage dans la période de référence.

4. Système selon la revendication 3, dans lequel
le premier dispositif (20) est en outre configuré pour fournir les informations de jeton au deuxième dispositif (30),
le second dispositif (30) est en outre configuré pour générer un quatrième texte chiffré en chiffrant les informations de jeton sur la base de la première clé (KEY_{A}) et fournir le quatrième texte chiffré au dispositif de stockage (30) via le premier dispositif (20), et
le dispositif de stockage (30) est en outre configuré pour obtenir les informations de jeton en déchiffrant le quatrième texte chiffré sur la base de la première clé (KEY_{A}).

5. Système selon l'une quelconque des revendications précédentes, dans lequel
le dispositif de stockage (30) est en outre configuré pour chiffrer une demande de signature de certificat comprenant la clé unique sur la base de la seconde clé (KEY_{B}) et fournir la demande de signature de certificat chiffrée au premier dispositif (20),
le premier dispositif (20) est en outre configuré pour déchiffrer la demande de signature de certificat chiffrée sur la base de la seconde clé (KEY_{B}), chiffrer une chaîne de certificats comprenant une pluralité de signatures relatives à la demande de signature de certificat, sur la base de la seconde clé (KEY_{B}) et fournir la chaîne de certificats chiffrée au dispositif de stockage (30), et
le périphérique de stockage (30) est en outre configuré pour déchiffrer la chaîne de certificats chiffrée sur la base de la seconde clé (KEY_{B}) et stocker la chaîne de certificats.

6. Système selon l'une quelconque des revendications précédentes, dans lequel
la première clé (KEY_{A}) est incluse dans le dispositif de stockage (30) au moment de la fabrication du dispositif de stockage, et
la seconde clé (KEY_{B}) est valide jusqu'à ce que le certificat soit stocké dans le périphérique de stockage (30).

7. Système selon l'une quelconque des revendications précédentes, dans lequel le dispositif de stockage (30) est en outre configuré pour générer la clé unique sur la base d'une valeur de hachage pour l'image logicielle mise à jour (IMG).

8. Système selon l'une quelconque des revendications précédentes, dans lequel l'image logicielle (IMG) comprend un chargeur de démarrage qui est d'abord exécuté sur la base du démarrage du dispositif de stockage (30).

9. Procédé de fonctionnement d'un système, le système comprenant un dispositif de stockage contenant une première clé (KEY_{A}) et configuré pour exécuter une image logicielle (IMG), un premier dispositif configuré pour commander le dispositif de stockage et un second dispositif configuré pour générer l'image logicielle (IMG) et stockant la première clé (KEY_{A}), le procédé comprenant :
au niveau du second dispositif,
la réception (S802) en provenance du premier dispositif d'une première clé publique (pKEY_{H}) et la génération d'un premier texte chiffré (Enc1) pour une image logicielle mise à jour et d'une seconde clé (KEY_{B}), sur la base de la première clé (KEY_{A}),
la génération d'un deuxième texte chiffré (Enc2) pour le premier texte chiffré (Enc1) et la seconde clé (KEY_{B}), sur la base de la première clé publique (pKEY_{H}), et
la fourniture (S802) lu deuxième texte chiffré (Enc2) au premier dispositif;
au niveau du premier dispositif, l'obtention (S805) du premier texte chiffré (Enc1) et de la seconde clé (KEY_{B}) en déchiffrant le deuxième texte chiffré (Enc2) sur la base d'une première clé secrète (sKEY_{H}) et la fourniture (S806) du premier texte chiffré (Enc1) et de la seconde clé (KEY_{B}) au dispositif de stockage ;
sur le dispositif de stockage, l'obtention (S807) de l'image logicielle mise à jour et de la seconde clé (KEY_{B}) en déchiffrant le premier texte chiffré (Enc1) à l'aide de la première clé (KEY_{A}) et l'établissement d'une session sécurisée entre le premier dispositif et le dispositif de stockage sur la base de la seconde clé (KEY_{B}). ); et
au niveau du premier dispositif, la mise en place (S809) via la session sécurisée, sur la base de la seconde clé (KEY_{B}), d'un certificat pour une clé unique du dispositif de stockage dans le dispositif de stockage.

10. Procédé selon la revendication 9, dans lequel l'établissement de la session sécurisée comprend :
la fourniture (S703), par le premier dispositif, d'une première demande d'établissement de la session sécurisée au dispositif de stockage ;
la fourniture (S702), par le dispositif de stockage, du premier dispositif avec une première réponse comprenant une première valeur de hachage générée sur la base de la seconde clé pour les données ;
la comparaison, par le premier dispositif, de la première valeur de hachage avec une seconde valeur de hachage générée sur la base de la seconde clé pour les données, et la transmission (S703), par le premier dispositif, d'une seconde requête comprenant la seconde valeur de hachage au dispositif de stockage ; et
la comparaison, par le dispositif de stockage, de la première valeur de hachage avec la seconde valeur de hachage et la fourniture (S704), par le dispositif de stockage, d'une seconde réponse indiquant l'achèvement de l'établissement de la session sécurisée au premier dispositif.

11. Procédé selon la revendication 10, dans lequel la mise en place du certificat dans le dispositif de stockage comprend :
la génération, par le premier dispositif, d'un deuxième texte chiffré en chiffrant le certificat sur la base de la seconde clé ;
la fourniture, par le premier dispositif, du deuxième texte chiffré au dispositif de stockage ; et
l'obtention, par le dispositif de stockage, du certificat en déchiffrant le deuxième texte chiffré sur la base de la seconde clé.

12. Procédé selon la revendication 11, comprenant en outre :
la transmission, par le premier dispositif, d'informations de jeton qui sont valides pour une période de référence et du premier texte chiffré au dispositif de stockage ;
la fourniture, par le premier dispositif, du deuxième texte chiffré au dispositif de stockage, sur la base du premier dispositif recevant la clé unique et les informations de jeton du dispositif de stockage dans le délai de référence.

13. Procédé selon la revendication 12, comprenant en outre :
la fourniture, par le premier appareil, des informations de jeton au second dispositif ;
la fourniture, par le second dispositif, d'un troisième texte chiffré généré en chiffrant les informations de jeton sur la base de la première clé au dispositif de stockage via le premier dispositif ; et
l'obtention, par le dispositif de stockage, des informations de jeton en déchiffrant le troisième texte chiffré sur la base de la première clé.

14. Procédé selon l'une quelconque des revendications 9 à 13, dans lequel
la première clé est incluse dans le dispositif de stockage au moment de la fabrication du dispositif de stockage, et
la seconde clé est valide jusqu'à ce que le certificat soit stocké sur le dispositif de stockage.

15. Procédé selon l'une quelconque des revendications 9 à 14, comprenant en outre la génération, par le dispositif de stockage, de la clé unique sur la base de l'image logicielle mise à jour.
